# EUROPÄISCHE PATENTANMELDUNG

(11) **EP 4 371 969 A1**
(43) Veröffentlichungstag der Anmeldung: **22.05.2024**
(21) Anmeldenummer: 23207835.2
(22) Anmeldetag: 06.11.2023
(51) Int. Cl.: C05F 17/921, C05F 17/971, C05F 3/06, C05F 17/40, C05F 9/02

(54) **VORRICHTUNG UND VERFAHREN ZUM HERSTELLEN VON HUMUSMATERIAL ODER KOMPOST**

(30) Priorität: 07.11.2022 DE 102022129318
(71) Anmelder: Witterra GmbH, 28857 Syke (DE)
(72) Erfinder: Witte, Valerio, 26203 Wardenburg (DE); Cordes, Florian, 28857 Syke (DE)
(74) Vertreter: Bittner, Thomas L.

(57) **Zusammenfassung**

Die Offenbarung betrifft eine Vorrichtung zum Herstellen von Humusmaterial oder Kompost, mit einem Aufbereitungsbecken (1), welches eingerichtet ist, zum Ausbilden eines Materialbetts (4) in dem Aufbereitungsbecken (1) ein festes organisches Trägermaterial wie Grünschnitt, Stroh, Mist, Frischkompost oder dergleichen aufzunehmen; einem Laufkran (5), welcher sich in Querrichtung über dem Aufbereitungsbecken (1) erstreckt und in Längsrichtung entlang des Aufbereitungsbeckens (1) verlagerbar ist; einer Wendeeinrichtung (7), welche an dem Laufkran (5) angeordnet ist, derart, dass die Wendeeinrichtung (7) mit dem Laufkran (5) in Längsrichtung des Aufbereitungsbeckens (1) verlagerbar ist, und welche Wendevorrichtungen aufweist, die eingerichtet sind, das feste organische Trägermaterial im Materialbett (4) zu wenden; einer Belüftungseinrichtung (22), die eingerichtet ist, das feste organische Trägermaterial im Bereich der Wendevorrichtungen (8) und / oder benachbart hierzu zu belüften; und einer dem Aufbereitungsbecken (1) zugeordneten Ablufteinrichtung, aufweisend eine Absaugeinrichtung (10), die an dem Laufkran (5) angeordnet und eingerichtet ist, im Materialbett (4) entstehende Abgase lokal abzusaugen; und einen Abluftwäscher (11; 12), der eingerichtet ist, die mittels der Absaugeinrichtung (10) abgesaugte Abluft über eine Abluftleitung zu empfangen und zu reinigen. Ferner wird ein Verfahren zum Betreiben einer Vorrichtung zum Herstellen von Humusmaterial oder Kompost bereitgestellt. (Fig. 1)

## Beschreibung

Die Erfindung betrifft eine Vorrichtung und ein Verfahren zum Herstellen von Humusmaterial oder Kompost.

### Hintergrund

In der Bodenkunde bezeichnet Humus üblicherweise die Gesamtheit der fein zersetzten organischen Substanzen des Erdbodens. Humus ist Teil der organischen Bodensubstanz. Zur Verbesserung des Bodens kann diesem separat erzeugtes Humusmaterial beigemischt werden.

Im Dokument EP 1 490 305 B1 ist eine Vorrichtung zum Behandeln von zootechnischem Abwasser offenbart. In einem Aufbereitungsbecken wird das zootechnische Abwasser in ein Materialbett aus Substanzen organischen Ursprungs eingebracht, um eine homogene Biomasse herzustellen. Dem Aufbereitungsbecken ist ein Lauf- oder Portalkran zugeordnet, welcher sich quer zum Aufbereitungsbecken über dieses erstreckt und in Längsrichtung entlang des Aufbereitungsbeckens bewegbar ist. Auf dem Laufkran ist ein Wagen befestigt, der entlang des Portalkrans quer zum Aufbereitungsbecken verlagerbar ist und von dem Rührmittel sowie Lüftermittel getragen werden. Die Rührmittel dienen zum Mischen der Substanzen organischen Ursprungs mit dem eingebrachten Abwasser.

Eine Vorrichtung zum Behandeln von organischem Abfall ist weiterhin im Dokument WO 02 / 185 34 A2 offenbart.

Das Dokument DE 28 23 959 A1 offenbart die Behandlung von Schüttgut, insbesondere für die Umwandlung von Müll in Kompost, mit Hilfe von Förderbändern, die das Material in gleichmäßigen Schichten bis zu einer bestimmten Höhe verteilen. Das Material wird eine Zeit lang ungestört gelassen, um die Reaktion abzuschließen, und anschließend in der gesamten Höhe aufgelockert. Dieser Vorgang wird so lange wiederholt, bis der gewünschte Reifegrad erreicht ist.

Das Dokument EP 1 550 647 A1 betrifft ein Verfahren zum Belüften eines Rotteprozesses, bei welchem der Rotte Rohluft zugeführt und aus der Rotte Prozessabluft abgezogen wird, wobei Teilmengen der Prozessabluft kontinuierlich und weitere Teilmengen der Prozessabluft gesondert und intermittierend abgezogen werden. Bei der Rottebelüftungseinrichtung mit einem Rottereaktor, einem Gebläse sowie Abluft- und Zuluftleitungen ist die den Rottereaktor verlassende Abluft an einen ersten Sammler angeschlossen. An den ersten Sammler sind wenigstens zwei gesonderte Zweigleitungen für Prozessabluft angeschlossen und es ist in wenigstens einer Zweigleitung ein Drossel- und/oder Absperrventil oder eine Steuerklappe eingebaut.

### Zusammenfassung

Aufgabe der Erfindung ist es, eine Vorrichtung und ein Verfahren zum Herstellen von Humusmaterial oder Kompost mittels eines aeroben Verfahrens anzugeben, mit denen die Betriebssicherheit bei solchen Vorrichtungen oder Anlagen verbessert ist.

Zur Lösung sind eine Vorrichtung sowie ein Verfahren zum Herstellen von Humusmaterial oder Kompost nach den unabhängigen Ansprüchen geschaffen. Ausgestaltungen sind Gegenstand von abhängigen Unteransprüchen.

Nach einem Aspekt ist eine Vorrichtung zum Herstellen von Humusmaterial oder Kompost geschaffen, die Folgendes aufweist: ein Aufbereitungsbecken, welches eingerichtet ist, zum Ausbilden eines Materialbetts in dem Aufbereitungsbecken ein festes organisches Trägermaterial wie Grünschnitt, Stroh, Mist, Frischkompost oder dergleichen aufzunehmen; einen Laufkran, welcher sich in Querrichtung über dem Aufbereitungsbecken erstreckt und in Längsrichtung entlang des Aufbereitungsbeckens verlagerbar ist; eine Wendeeinrichtung, welche an dem Laufkran angeordnet ist, derart, dass die Wendeeinrichtung mit dem Laufkran in Längsrichtung des Aufbereitungsbeckens verlagerbar ist, und welche Wendevorrichtungen aufweist, die eingerichtet sind, das feste organische Trägermaterial im Materialbett zu wenden; eine Belüftungseinrichtung, die eingerichtet ist, das feste organische Trägermaterial im Bereich der Wendevorrichtungen und / oder benachbart hierzu zu belüften; und eine dem Aufbereitungsbecken zugeordneten Ablufteinrichtung. Die Ablufteinrichtung weist weiterhin Folgendes auf: eine Absaugeinrichtung, die an dem Laufkran angeordnet und eingerichtet ist, im Materialbett entstehende Abgase lokal abzusaugen; und ein Abluftwäscher, der eingerichtet ist, die mittels der Absaugeinrichtung abgesaugte Abluft über eine Abluftleitung zu empfangen und zu reinigen.

Nach einem weiteren Aspekt ist ein Verfahren zum Betreiben einer Vorrichtung zum Herstellen von Humusmaterial oder Kompost geschaffen, wobei die Vorrichtung Folgendes aufweist: ein Aufbereitungsbecken; einen Laufkran, welcher sich in Querrichtung über dem Aufbereitungsbecken erstreckt und in Längsrichtung entlang des Aufbereitungsbeckens verlagerbar ist; eine Wendeeinrichtung, welche an dem Laufkran angeordnet ist, derart, dass die Wendeeinrichtung mit dem Laufkran in Längsrichtung des Aufbereitungsbeckens verlagerbar ist, und welche Wendevorrichtungen aufweist, die eingerichtet sind, das feste organische Trägermaterial im Materialbett zu wenden; eine Belüftungseinrichtung, die eingerichtet ist, das feste organische Trägermaterial im Bereich der Wendevorrichtungen und / oder benachbart hierzu zu belüften; und eine dem Aufbereitungsbecken zugeordneten Ablufteinrichtung mit einer Absaugeinrichtung, die an dem Laufkran angeordnet ist, und einem Abluftwäscher. Bei dem Verfahren ist Folgendes vorgesehen: Herstellen eines Materialbetts in dem Aufbereitungsbecken, indem ein festes organisches Trägermaterial wie Grünschnitt, Stroh, Mist, Frischkompost oder dergleichen in dem Aufbereitungsbecken eingebracht wird; Verlagern der Wendeeinrichtung in eine Arbeitsposition im Bereich des Aufbereitungsbecken, wobei die Wendeeinrichtung hierbei mittels Verlagern des Laufkrans in die Arbeitsstellung verlagert wird; Wenden des festen organischen Trägermaterials in einem lokalen Bereich des Materialbetts mittels der Wendevorrichtungen; Absaugen von im Materialbett entstehenden Abgasen mittels der Absaugeinrichtung; und Reinigen der abgesaugten Abluft mittels des Abluftwäschers.

Mit Hilfe der Vorrichtung und des Verfahrens ist erreicht, dass beim Herstellen des Humusmaterials oder Komposts in dem Aufbereitungsbecken entstehende eventuell schädliche Abgase abgesaugt und gereinigt werden. Es wird so vermieden, dass die Abgase sich in nicht gewolltem Umfang die weitere Umgebung ausbreiten können, insbesondere in eine Halle oder ein Gebäude, die / das offen sein kann und in welcher / welchem die Vorrichtung zur Humusmaterial- oder Kompostherstellung untergebracht ist. Mit Hilfe der Absaugeinrichtung können entstehende Abgase, insbesondere unmittelbar beim Wenden des festen organischen Trägermaterials im Materialbett, zumindest lokal im Bereich des Aufbereitungsbeckens abgesaugt werden, um die Abgase dann zu reinigen. Eine mögliche Ausbreitung der Abgase von dem Aufbereitungsbecken weg in die Umgebung ist so minimiert oder ganz verhindert.

Dem Laufkran kann eine Antriebsvorrichtung zugeordnet sein, mit der der Laufkran maschinell gesteuert Längsrichtung des Aufbereitungsbeckens verlagerbar ist.

Die Absaugeinrichtung kann eingerichtet sein, die entstehenden Abgase zumindest in einem Bereich benachbart zu der Wendeeinrichtung abzusaugen. Auf diese Weise ermöglicht die Absaugeinrichtung das direkte Absaugen von Abgasen, die beim Betrieb der Wendeeinrichtung lokal in dem Bereich entstehen, in welchem die Wendevorrichtungen in das feste organische Trägermaterial des Materialpads eintauchen, um dieses lokal zu wenden. Die Wendeeinrichtung kann mit Hilfe des Laufkrans in unterschiedliche Bereiche oder Positionen des Materialbetts verlagert werden, um dort das feste organische Trägermaterial zu wenden. Der Laufkran bewegt sich hierbei oberhalb des Materialbetts, zum Beispiel entlang einer Führungseinrichtung, die zum Beispiel an seitlichen Wänden des Aufbereitungsbeckens angeordnet sein kann. Lokal entstehende Abgase können mit der Absaugeinrichtung unmittelbar abgesaugt werden.

Die Abgase können beim und / oder durch Wenden des festen organischen Trägermaterials im Materialbett entstehen. Insbesondere kann die Absaugeinrichtung eingerichtet sein, die beim und / oder durch Wenden des festen organischen Trägermaterials im Materialbett entstehenden Abgase lokal abzusaugen.

Die Absaugeinrichtung kann mehrere getrennt voneinander gebildete Ansaugvorrichtungen aufweisen. Mit Hilfe der getrennt gebildeten Ansaugvorrichtungen ist eine Anordnung von Ansaugvorrichtungen bereitgestellt, wobei die getrennten Ansaugvorrichtungen jeweils eingerichtet sind, lokal Abgase anzusaugen, die dann mit Hilfe des Abluftwäschers gereinigt werden. Die Ansaugvorrichtungen können an einer Leitung gebildet sein, über welche die angesaugte Abluft dem Abluftwäscher zugeführt wird.

Alternativ kann vorgesehen sein, dass die Absaugeinrichtung mit einer (einzigen) zentralen Ansaugvorrichtung gebildet ist. Die zentrale Ansaugvorrichtung kann eingerichtet sein, Abgase anzusaugen, die vorzugsweise anschließend mit Hilfe des Abluftwäschers gereinigt werden.

Die Ansaugvorrichtungen können in Längsrichtung des Laufkrans entlang des Laufkrans verteilt angeordnet sein. Die Anordnung von Ansaugvorrichtungen kann sich hierbei über die gesamte Breite des Aufbereitungsbeckens in dessen Querrichtung entlang des Laufkrans oder einen Teilbereich hiervon erstrecken.

Die Ansaugvorrichtungen können zumindest auf gegenüberliegenden Längsseiten des Laufkrans angeordnet sein. Beispielsweise können auf den gegenüberliegenden Längsseiten des Laufkrans ein- oder mehrreihige Anordnungen von Ansaugvorrichtungen vorgesehen sein, die sich über die gesamte Länge des Laufkrans (in Querrichtung des Aufbereitungsbeckens) oder einen Teil hiervon erstrecken.

Einer oder mehreren Ansaugvorrichtungen kann jeweils eine Ventileinrichtung zugeordnet sein, die eingerichtet ist, die eine oder die mehreren Ansaugvorrichtungen zum Ansaugen zu öffnen und zum Blockieren zu schließen. Auf diese Weise ist eine Betriebssteuerung für die jeweilige Ansaugvorrichtung ermöglicht, derart, dass die zugeordnete Ventileinrichtung mittels entsprechender Steuersignale von einer Ventilsteuerung betriebsabhängig geöffnet und geschlossen wird. Auf diese Weise können einzelne Ansaugvorrichtungen und / oder Gruppen von Ansaugvorrichtungen zum Ansaugen geöffnet oder mittels Schließen außer Betrieb gesetzt werden. Erstreckt sich beispielsweise die Wendeeinrichtung mit den Wendevorrichtungen nur über einen Teil der Länge des Laufkrans in Querrichtung des Aufbereitungsbeckens, können in diesem Bereich des Laufkrans angeordnete Ansaugvorrichtungen mit Hilfe der zugeordneten Ventileinrichtungen gemeinsam geöffnet und geschlossen werden, beispielsweise separat von Ansaugvorrichtungen, die an dem Laufkran außerhalb des Bereiches der Wendeeinrichtung gebildet sind.

Der einen oder den mehreren Ventileinrichtungen kann eine Ventilsteuerung zugeordnet sein, welche eingerichtet ist, die eine oder die mehreren Ventileinrichtungen in Abhängigkeit von Positionssignalen zu öffnen / schließen, welche eine Verlagerungsposition des Laufkrans beim Verlagern im Bereich des Aufbereitungsbeckens anzeigen. Beispielsweise kann hierbei vorgesehen sein, mit Hilfe der Ventileinrichtungen eine oder mehrere Ansaugvorrichtungen zu schließen, wenn die Positionssignale anzeigen, dass der Laufkran momentan entlang des Aufbereitungsbeckens verlagert wird. Wenn die Positionssignale eine Ruheposition anzeigen, können die Ansaugvorrichtungen (wieder) geöffnet werden. Es kann aber auch vorgesehen sein, die Ansaugvorrichtungen zum Ansaugen zu öffnen, wenn die Positionssignale eine Verlagerung des Laufkrans mit der Absaugeinrichtung anzeigen, um so beim Verfahren des Laufkrans über dem Materialbett eventuell austretende Abgase abzusaugen.

Alternativ oder ergänzend kann vorgesehen sein, die Ansaugvorrichtungen zum Ansaugen in Betrieb zu setzen, wenn die Wendeeinrichtung arbeiten, also das feste organische Trägermaterial im Materialbett gewendet wird.

Es kann eine Laufeinheit vorgesehen sein, die auf dem Laufkran angeordnet und entlang des Laufkrans und so in Querrichtung des Aufbereitungsbeckens verlagerbar ist. Die Laufeinheit kann mit einem Wagen gebildet sein, welcher auf dem Laufkran in Querrichtung zum Aufbereitungsbecken bewegbar ist. Die Laufeinheit ermöglicht es, hieran angeordnete Teile, Bauteile oder Funktionselemente der Vorrichtung zur Humusherstellung, ergänzend zum Verlagern mittels des Laufkrans in Längsrichtung des Aufbereitungsbeckens, in Querrichtung des Aufbereitungsbeckens zu positionieren. Beispielsweise kann die Laufeinheit mittels Roll- und / oder Verschiebeelementen an dem Laufkran gelagert sein. Der Laufeinheit kann eine Antriebsvorrichtung zugeordnet sein, mit der die Laufeinheit maschinell gesteuert entlang des Laufkrans und in Querrichtung des Aufbereitungsbeckens verlagerbar ist.

Die Absaugeinrichtung kann zumindest teilweise an der Laufeinheit gebildet sein. Ist die Absaugeinrichtung ganz oder teilweise an der Laufeinheit gebildet, so ermöglicht dieses eine Verlagerung der Absaugeinrichtung, insbesondere von einzelnen Ansaugvorrichtungen, entlang des Laufkrans in Querrichtung des Aufbereitungsbeckens.

Die Wendevorrichtungen können an der Laufeinheit angeordnet und mit dieser in Querrichtung des Aufbereitungsbeckens verlagerbar sein. Bei dieser oder anderen Ausführungsformen kann vorgesehen sein, dass zumindest eine der folgenden Einrichtungen an der Laufeinheit angeordnet und somit zusammen mit dieser verlagerbar ist: Wendeeinrichtung, Belüftungseinrichtung und Dosiereinrichtung. Grundsätzlich ermöglicht dies eine weitergehende Flexibilität hinsichtlich der Positionierung der jeweiligen Einrichtung relativ zum Materialbett in dem Aufbereitungsbecken. Mit Hilfe des Laufkrans und der Laufeinheit ist die jeweilige Einrichtung in x- wie auch in y-Richtung bezüglich der Oberfläche des Materialbetts verlagerbar.

Der Abluftwäscher kann mit einem mobilen Abluftwäscher gebildet sein, welcher beim Verlagern des Laufkrans und / oder der Laufeinheit jeweils zusammen mit Laufkran und / oder der Laufeinheit mitverlagerbar ist. Der mobile Abluftwäscher ist so zusammen mit dem Laufkran und / oder der Laufeinheit relativ zum Materialbett in dem Aufbereitungsbecken positionierbar. Aufgrund des Mitführens des mobilen Abluftwäschers auf dem Laufkran kann eine Luftleitung von der Absaugeinrichtung zum Abluftwäscher möglichst kurz ausgeführt werden.

Der Abluftwäscher kann mit einem stationären Abluftwäscher gebildet sein, welcher in Bezug auf das Aufbereitungsbecken stationär angeordnet und über eine flexible Abluftleitung mit der Absaugeinrichtung verbunden ist. Die flexible Abluftleitung ermöglicht eine fortdauernde Verbindung zwischen der Absaugeinrichtung und dem stationären Abluftwäscher, wenn die Absaugeinrichtung auf dem Laufkran / der Laufeinheit über dem Materialbett verlagert wird. Der stationäre Abluftwäscher kann beispielsweise in Längsrichtung des Aufbereitungsbeckens in einem mittleren Bereich angeordnet sein, um die flexible Abluftleitung möglichst kurz auszuführen. Bei der Ausführung mit dem stationären Abluftwäscher ist im Unterschied zum mobilen Abluftwäscher auf dem Laufkran und / oder der Laufeinheit eine zusätzliche Gewichtsbelastung des Laufkrans vermieden.

Es kann eine Trenneinrichtung vorgesehen sein, die eingerichtet ist, ausgehend von dem Laufkran, zumindest einen räumlichen Bereich oberhalb des Materialbetts und unterhalb des Laufkrans ein- oder mehrseitig von der Umgebung oberhalb des Materialbetts abzutrennen, wobei die Absaugeinrichtung eingerichtet ist, die Abgase zumindest in dem räumlichen Bereich abzusaugen. Die Trenneinrichtung kann sich beispielsweise entlang des Laufkrans in Querrichtung des Aufbereitungsbeckens zwischen gegenüberliegenden Seitenwänden des Aufbereitungsbeckens (Beckenwand) unterbrochen oder durchgehend erstrecken. Die Trenneinrichtung kann entlang des Laufkrans vorder- und / oder rückseitig ausgebildet sein, also ein- oder beidseitig. Im Bereich benachbart zu den gegenüberliegenden seitlichen Beckenwände des Aufbereitungsbeckens kann die Trenneinrichtung im Wesentlichen an die jeweilige Beckenwand anschließen, beispielsweise dadurch, dass die Trenneinrichtung beim Verlagern des Laufkrans auf der Oberfläche der Beckenwand rutscht, so dass ein im Wesentlichen geschlossener Raum ausgebildet werden kann, welcher mittels der Trenneinrichtung gegenüber der Umgebung abgetrennt ist.

In einer Ausgestaltung ist die Trenneinrichtung mit Gummilamellen gebildet. Bei dieser oder anderen Ausführungsformen kann sich eine Trenneinrichtung aus flexiblem Material nach unten bis hin zur Oberfläche des Materialbetts erstrecken, derart, dass die flexible Trenneinrichtung beim Verlagern des Laufkrans in Längsrichtung des Aufbereitungsbeckens auf dem Materialbett gleitet oder rutscht.

Auf seiner Oberseite oder deckseitig kann der Raumbereich mittels einer weiteren Abdeck- oder Trenneinrichtung im Wesentlichen abgeschlossen sein, die an dem Laufkran angeordnet und sich über dessen Fläche (in Draufsicht) erstreckt. Die weitere Abdeck- oder Trenneinrichtung kann zumindest teilweise vom Laufkran selbst und / oder Komponenten oder Bauteilen gebildet sein, die am Laufkran angeordnet sind, soweit diese den Raumbereich begrenzend oder abdeckend ausgebildet sind. Die weitere Abdeck- oder Trenneinrichtung kann auf einer Unterseite des Laufkrans angeordnet sein.

Die Ansaugvorrichtungen können ausschließlich in dem räumlichen Bereich angeordnet sein, welcher mittels der Trenneinrichtung von der Umgebung abgetrennt ist. In den verschiedenen Ausgestaltungen unterstützt die Trenneinrichtung jeweils eine mögliche ungewünschte Ausbreitung der Abgase.

Die Vorrichtung kann eine Dosiereinrichtung aufweisen, die eingerichtet ist, ein flüssiges Material in das feste organische Trägermaterial zumindest im Bereich der Wendevorrichtungen und / oder benachbart hierzu einzudosieren. Mit Hilfe der Absaugeinrichtung können entstehende Abgase insbesondere unmittelbar beim Wenden des festen organischen Trägermaterials im Materialbett und / oder beim Eindosieren des flüssigen Materials zumindest lokal im Bereich des Aufbereitungsbeckens abgesaugt werden.

Es kann vorgesehen sein, die Ansaugvorrichtungen zum Ansaugen in Betrieb zu setzen, wenn die Wendeeinrichtung und / oder die Dosiereinrichtung arbeiten, also das feste organische Trägermaterial im Materialbett gewendet und / oder das flüssige Material in das feste organische Trägermaterial eindosiert wird.

Dem Aufbereitungsbecken kann ein Reservoir zugeordnet sein, welches eingerichtet ist, eine Vorratsmenge des flüssigen Materials aufzunehmen, derart, dass das flüssige Material mittels einer Pumpeinrichtung aus dem Reservoir über eine Zuführleitung der Dosiereinrichtung zum Eindosieren zuführbar ist. Das Reservoir kann ein- oder mehrseitig durch eine Beckenwand des Aufbereitungsbeckens begrenzt sein. Das Reservoir kann in Fließverbindung mit dem Aufbereitungsbecken stehen, derart, dass sich im Aufbereitungsbecken absetzende Flüssigkeit zumindest teilweise im Reservoir sammelt, um die gesammelte Flüssigkeit dann wieder zum Eindosieren zu verwenden. Das Reservoir kann hinsichtlich des hierin aufnehmbaren flüssigen Materials eingerichtet sein, eine Tagesration des in das Materialbett einzudosierenden flüssigen Materials aufzunehmen, also die Menge an flüssigem Material, die innerhalb von 24 Stunden, über den Tag verteilt, in das Materialbett einzudosieren ist.

Das flüssige Material kann beispielsweise organische Flüssigkeiten, insbesondere mindestens eines aus der Gruppe landwirtschaftliche Abwässer, industrielle Abwässer, Gärprodukte, Gülle und Klärschlamm aufweisen.

Der Belüftungseinrichtung kann eine Gebläseeinrichtung zugeordnet sein, welche eingerichtet ist, zum Belüften einen Luftstrom zu erzeugen und der Belüftungseinrichtung zuzuführen. Die Gebläseeinrichtung kann zum Beispiel auf dem Laufkran angeordnet sein, insbesondere auf der Laufeinheit. Die Belüftungseinrichtung kann zum Ausbringen des Belüftungsstroms Auslässe oder Belüftungsdüsen aufweisen, insbesondere an den Wendevorrichtungen und dort zumindest in einem Abschnitt, welcher beim Wenden des festen organischen Trägermaterial ins Materialbett eintaucht.

Die Wendevorrichtungen können mit einem jeweiligen Rührelement gebildet sein, welches zumindest im Wendebetrieb zum lokalen Wenden des festen organischen Trägermaterials unterhalb des Laufkrans in das Materialbett eintaucht. Ein den Wendevorrichtungen zugeordneter Antrieb zum Betreiben der Wendevorrichtungen, beispielsweise zum Drehen von Rührelementen, kann auf dem Laufkran angeordnet sein, beispielsweise auf der Laufeinheit. Der Antrieb kann beispielsweise mit einem Schneckengetriebe ausgeführt sein.

Die vorangehend im Zusammenhang mit der Vorrichtung zum Herstellen des Humusmaterials oder Komposts erläuternden Ausgestaltungen können in Verbindung mit dem Verfahren entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vorrichtung zum Herstellen von Humusmaterial oder Kompost;
- Fig. 2: eine schematische Darstellung einer Anordnung von funktionalen Einrichtungen der Vorrichtung zum Herstellen von Humusmaterial oder Kompost und
- Fig. 3: eine schematische Darstellung eines Abschnitts der Vorrichtung zum Herstellen von Humusmaterial oder Kompost aus Fig. 1 von oben mit einem Laufkran.

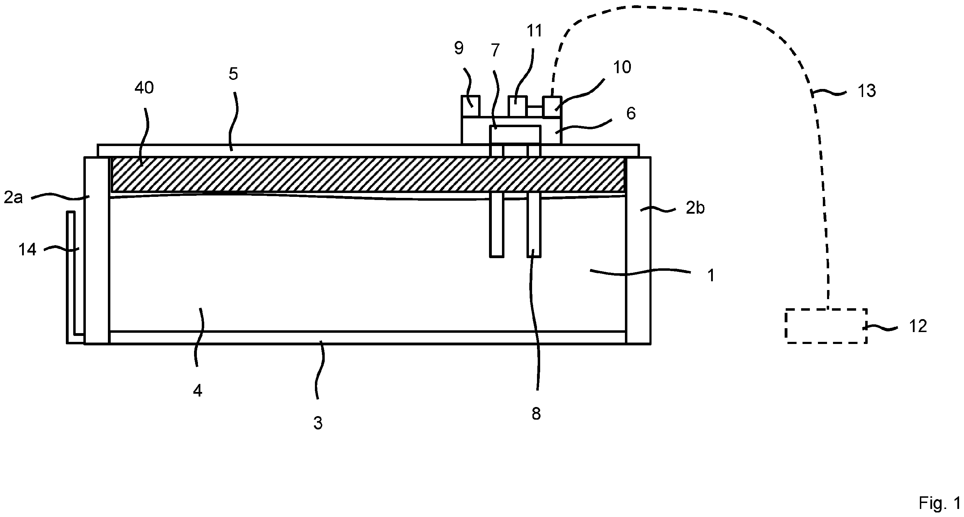

Fig. 1 zeigt eine schematische Darstellung einer Vorrichtung zum Herstellen von Humusmaterial oder Kompost unter Verwendung eines aeroben Verfahrens. In einem Aufbereitungsbecken 1, welches seitlich von Beckenwänden 2a, 2b begrenzt ist und bei der dargestellten Ausführungsform eine Bodenwand 3 aufweist, ist ein Materialbett 4 aus festem organischen Trägermaterial gebildet, zum Beispiel unter Verwendung von Grünschnitt, Stroh, Mist, Frischkompost und / oder dergleichen. Das Aufbereitungsbecken 1 kann auf der Vorder- und / oder der Rückseite offen sein. Alternativ kann aber auch eine geschlossene Ausführung mit einer vorderen und einer hinteren Beckenwand (nicht dargestellt) vorgesehen sein.

Oberhalb des Materialbetts 4 ist ein Laufkran 5 angeordnet, welcher sich in Querrichtung (quer zur Längsrichtung) über das Aufbereitungsbecken 1 erstreckt und in Längsrichtung des Aufbereitungsbeckens 1 verlagerbar ist, bei der schematischen Darstellung in Fig, 1 also in die Zeichenebene hinein und aus dieser heraus. Der Laufkran 5 kann hierbei mittels einer Führungseinrichtung geführt werden, die zum Beispiel auf den Beckenwänden 2a, 2b ausgebildet sein kann. Für die Verlagerung des Laufkrans 5 in Längsrichtung des Aufbereitungsbeckens 1 kann eine manueller und / oder maschineller Antrieb vorgesehen sein.

Bei dem gezeigten Ausführungsbeispiel ist auf dem Laufkran 5 eine Laufeinheit 6 angeordnet, derart, dass die Laufeinheit 6 entlang des Laufkrans 5 und somit in Querrichtung des Aufbereitungsbeckens 1 zwischen den Beckenwänden 2a, 2b verlagerbar ist. Alternativ kann die Laufeinheit 6, die mit einem Wagen gebildet sein kann, entfallen.

Eine Wendeeinrichtung 7, die beim gezeigten Ausführungsbeispiel an der Laufeinheit 6 angeordnet ist, kann auf diese Weise in Längs- wie auch in Querrichtung des Aufbereitungsbeckens 1 in verschiedene Verlagerungs- oder Arbeitsstellungen oder Positionen relativ zum Materialbett verlagert werden. Wendevorrichtungen 8 der Wendeeinrichtung 7, die gemäß Fig. 1, zumindest in einer gezeigten Arbeitsstellung, in das Materialbett 4 eintauchen und beispielsweise ein jeweiliges Rührelement aufweisen, sind eingerichtet, das feste organische Trägermaterial im Materialbett 4 lokal zu wenden. Mit Hilfe des Laufkrans 5 und der Laufeinheit 6 kann die Wendeeinrichtung 7 an beliebige Positionen im Bereich des Materialbetts 4 verlagert werden, um dort lokal das feste organische Trägermaterial zu wenden oder zu mischen. Hierbei können die Wendevorrichtungen 8 betrieben werden, wenn Laufkran 5 und / oder Laufeinheit 6 ruhen oder in Bewegung sind.

Ist die Laufeinheit 6 bei einer alternativen Ausgestaltung nicht vorgesehen, sondern nur der Laufkran 5, wird dieser verwendet, um die Wendeeinrichtung 7 relativ zum Materialbett 4 zu positionieren. Hierbei kann vorgesehen sein, dass sich eine Anordnung der Wendevorrichtungen 8 im Wesentlichen über die gesamte Breite des Aufbereitungsbeckens zwischen den gegenüberliegenden Beckenwänden 2a, 2b erstreckt, zum Beispiel in Form einer ein- oder mehrreihigen Anordnung von Wendevorrichtungen 8.

Bei dem gezeigten Ausführungsbeispiel sind an der Laufeinheit 6 weitere funktionale Einrichtungen 9 der Vorrichtung zum Herstellen des Humusmaterials angeordnet, so dass diese funktionalen Einrichtungen 9 zusammen mit dem Laufkran 5 und der Laufeinheit 6 verlagerbar sind. Gemäß Fig. 1 gehört hierzu zum Beispiel eine Absaugeinrichtung 10, welche eingerichtet ist, Abgase oder Abluft ab- oder anzusaugen, die insbesondere beim Wenden oder Mischen des festen organischen Trägermaterials im Materialbett 4 entstehen.

Die so abgesaugte Abluft wird einem mobilen Abluftwäscher 11 zum Reinigen zugeführt, welcher bei dem gezeigten Ausführungsbeispiel nach Fig. 1 auf der Laufeinheit 6 angeordnet ist. Alternativ kann der mobile Abluftwäscher 11 auf dem Laufkran 5 angeordnet sein, so dass der mobile Abluftwäscher 11 zusammen mit dem Laufkran 5 und / oder der Laufeinheit 6 verlagert wird.

Alternativ oder ergänzend kann ein stationärer Abluftwäscher 12 vorgesehen sein, der über eine flexible Abluftleitung 13 mit der Absaugeinrichtung 10 auf dem Laufkran 5 verbunden ist. Die flexible Abluftleitung 13 ermöglicht es, beim Verlagern des Laufkrans 5 und / der der Laufeinheit 6 und der hiermit verbundenen Verlagerung der Absaugeinrichtung 10 die Verbindung zwischen stationärem Abluftwäscher 12 und der Absaugeinrichtung 10 aufrechtzuerhalten. Der stationäre Abluftwäscher 12 kann beispielsweise seitlich benachbart zu dem Aufbereitungsbecken 1 angeordnet sein.

Die Vorrichtung zur Humusmaterial- oder Kompostherstellung kann in einer Halle oder einem anderen Gebäude (nicht dargestellt) angeordnet sein. Zum Herstellen des Humusmaterials oder Komposts wird in das feste organischer Trägermaterial des Materialbetts 4 ein flüssiges Material eingebracht, insbesondere flüssige Reststoffe aus der Landwirtschaft und der Industrie. Dieses kann zuvor in einem Reservoir 14 aufgenommen sein, welches bei dem gezeigten Ausführungsbeispiel in Fig. 1 seitlich der Beckenwand 2a und von dieser einseitig begrenzt gebildet ist.

Für die Einbringung von flüssigem Material in das Materialbett 4 ist dies üblicherweise pumpfähig. Je nach Beschaffenheit weist das flüssige Material zum Beispiel einen Trockensubstanz-Gehalt von höchstens etwa 20%, in manchen Fällen sogar bis höchstens etwa 25%. Außerdem sollte das flüssige Material frei von Inhaltsstoffen sein, die biologisch hemmend wirken können, wie zum Beispiel Reinigungs- oder Arzneimittel. Das flüssige Material kann zum Beispiel eine Flüssigkeit ausgewählt aus der folgenden Gruppe sein: Wirtschaftsdünger aus der Tierhaltung, Gärprodukte aus landwirtschaftlichen Biogasanlagen, Gärprodukte aus industriellen Biogasanlagen (Speisereste, Bioabfall), Klärschlamm aus der kommunalen und industriellen Abwasseraufbereitung und Industrielle Abwässer, beispielweise aus der Lebensmittelherstellung.

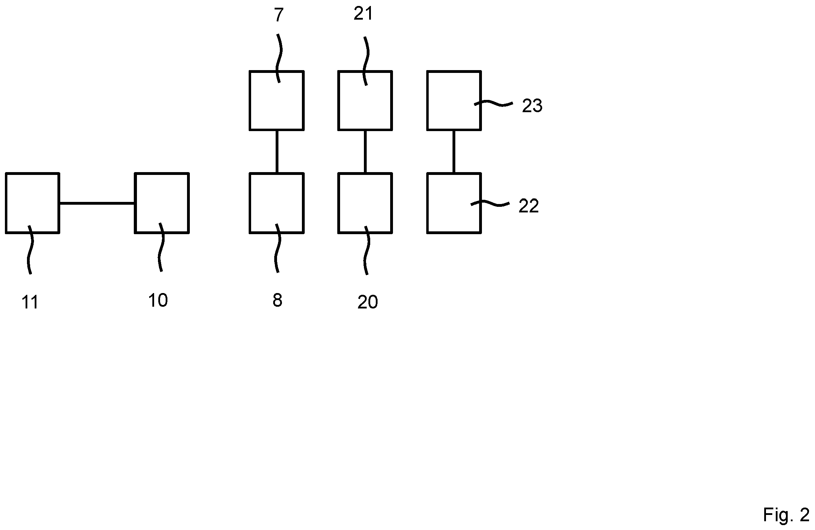

Fig. 2 zeigt eine schematische Darstellung einer Anordnung mit funktionalen Einrichtungen oder Komponenten der Vorrichtung zur Humusmaterial- oder Kompostherstellung.

Zusammen mit dem Wenden des festen organischen Trägermaterials im Materialbett 4 mit Hilfe der Wendevorrichtungen 8 der Wendeeinrichtung 7 oder getrennt hiervon wird das flüssige Material mit Hilfe einer Dosiereinrichtung 20 in das feste organische Trägermaterial des Materialbetts 4 eingebracht, wobei das flüssige Material der Dosiereinrichtung 20 mit Hilfe einer Pumpeinrichtung 21 zugeführt wird, insbesondere aus dem Reservoir 14.

Auch wird das feste organische Trägermaterial im Materialbett 4 mit Hilfe einer Belüftungseinrichtung 22 belüftet, sei es gleichzeitig mit dem Eindosieren des flüssigen Materials und / oder dem Wenden oder getrennt hiervon. Der Belüftungseinrichtung 22 ist eine Gebläseeinrichtung 23 zugeordnet, die zum Belüften einen Luftstrom erzeugt, welcher von der Belüftungseinrichtung 22 empfangen und über Luftaustrittsöffnungen in dem festen organischen Trägermaterial eingebracht wird, wobei die Luftaustrittsöffnungen beispielsweise an den Wendevorrichtungen 8 ausgebildet sind, insbesondere in einem Abschnitt der Wendevorrichtungen 8, welcher beim Wenden oder Mischen in das feste organische Trägermaterial des Materialbetts 4 eintaucht. Die Dosiereinrichtung 20 sowie die Belüftungseinrichtung 22 sind Teil der funktionalen Einrichtungen 9, die auf dem Laufkran 5 und / oder der Laufeinheit 6 und somit mit diesen verlagerbar angeordnet sind.

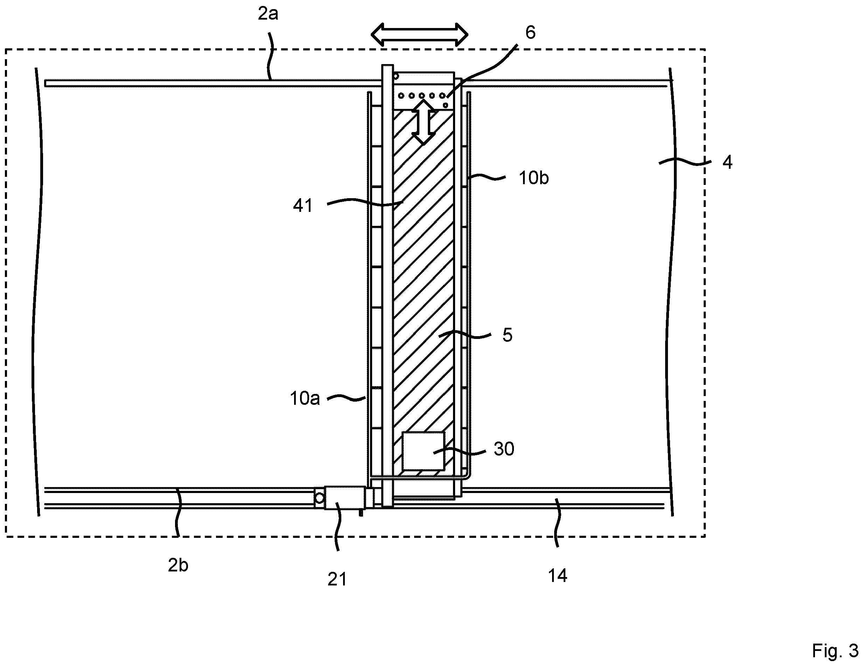

Fig. 3 zeigt eine schematische Darstellung eines Abschnitts der Vorrichtung aus Fig. 1 mit dem Laufkran 5 und der Laufeinheit 6 oberhalb des Materialbetts 4 von oben.

Gemäß dem gezeigten Ausführungsbeispiel ist die Absaugeinrichtung 10 mit Ansaugvorrichtungen 10a, 10b ausgebildet, die sich auf gegenüberliegenden Seiten des Laufkrans 5 und entlang des Laufkrans 5 erstrecken. Die Ansaugvorrichtungen 10a, 10b können mit einer Anordnung von Ansaugöffnungen ausgeführt sein, die mit einer jeweils zugeordneten Ventileinrichtung zum Öffnen und zum Schließen steuerbar sind, indem mittels einer Ventilsteuerung 30 Steuersignale bereitgestellt werden. Mit Hilfe der Ventilsteuerung 30 können die Ansaugöffnungen der Ansaugvorrichtungen 10a, 10b beispielsweise in Abhängigkeit von einer Verlagerungsstellung der Laufeinheit 6 mit der Wendeeinrichtung 7 in Querrichtung des Aufbereitungsbeckens 1 geöffnet oder geschlossen werden, so dass zum Beispiel stets Ansaugöffnungen geöffnet werden, die sich benachbart zu der Laufeinheit 6 in der jeweiligen Stellung befinden. Auf diese Weise kann die Absaugeinrichtung 10 effizient gesteuert werden, um lokal auftretende Abgase oder Abluft abzusaugen.

Wie sich aus Fig. 1 ergibt, ist an dem Laufkran 5 eine sich vom Laufkran 5 zum Materialbett 4 hin erstreckende Abdeckeinrichtung 40 vorgesehen, die zum Beispiel aus einem flexiblen Material gebildet sein kann, insbesondere Gummilamellen. Die Abdeckeinrichtung 40 kann auf den gegenüberliegenden Seiten des Laufkrans 5 ausgebildet sein, so dass ein Raumbereich zwischen dem Laufkran 5 und dem Materialbett 4 gegenüber der Umgebung abgetrennt wird. Auf seiner Oberseite oder deckseitig ist der Raumbereich mittels einer weiteren Abdeckung 41 im Wesentlichen abgeschlossen, die an dem Laufkran 5 angeordnet und sich über dessen Fläche (in Draufsicht) erstreckt. Die weitere Abdeckung 41 kann zumindest teilweise vom Laufkran 5 selbst und / oder Komponenten oder Bauteilen gebildet sein, die am Laufkran 5 angeordnet sind, soweit diese den Raumbereich begrenzend oder abdeckend ausgebildet sind. Mit Hilfe der Absaugeinrichtung 10 können in einer Ausführungsform insbesondere die Abgase / Abluft in diesem Raumbereich abgesaugt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung zum Herstellen von Humusmaterial oder Kompost, mit:
- einem Aufbereitungsbecken (1), welches eingerichtet ist, zum Ausbilden eines Materialbetts (4) in dem Aufbereitungsbecken (1) ein festes organisches Trägermaterial wie Grünschnitt, Stroh, Mist, Frischkompost oder dergleichen aufzunehmen;
- einem Laufkran (5), welcher sich in Querrichtung über dem Aufbereitungsbecken (1) erstreckt und in Längsrichtung entlang des Aufbereitungsbeckens (1) verlagerbar ist;
- einer Wendeeinrichtung (7), welche an dem Laufkran (5) angeordnet ist, derart, dass die Wendeeinrichtung (7) mit dem Laufkran (5) in Längsrichtung des Aufbereitungsbeckens (1) verlagerbar ist, und welche Wendevorrichtungen aufweist, die eingerichtet sind, das feste organische Trägermaterial im Materialbett (4) zu wenden;
- einer Belüftungseinrichtung (22), die eingerichtet ist, das feste organische Trägermaterial im Bereich der Wendevorrichtungen (8) und / oder benachbart hierzu zu belüften; und
- einer dem Aufbereitungsbecken (1) zugeordneten Ablufteinrichtung, aufweisend
- eine Absaugeinrichtung (10), die an dem Laufkran (5) angeordnet und eingerichtet ist, im Materialbett (4) entstehende Abgase lokal abzusaugen; und
- einen Abluftwäscher (11; 12), der eingerichtet ist, die mittels der Absaugeinrichtung (10) abgesaugte Abluft über eine Abluftleitung zu empfangen und zu reinigen.

2. Vorrichtung nach Anspruch 1, **dadurch gekennzeichnet, dass** die Absaugeinrichtung (10) eingerichtet ist, die entstehenden Abgase zumindest in einem Bereich benachbart zu der Wendeeinrichtung (7) abzusaugen.

3. Vorrichtung nach Anspruch 1 oder 2, **dadurch gekennzeichnet, dass** die Absaugeinrichtung (10) mehrere getrennt voneinander gebildete Ansaugvorrichtungen aufweist.

4. Vorrichtung nach Anspruch 3, **dadurch gekennzeichnet, dass** die Ansaugvorrichtungen in Längsrichtung des Laufkrans (5) entlang des Laufkrans (5) verteilt angeordnet sind.

5. Vorrichtung nach Anspruch 3 oder 4, **dadurch gekennzeichnet, dass** die Ansaugvorrichtungen zumindest auf gegenüberliegenden Längsseiten des Laufkrans (5) angeordnet sind.

6. Vorrichtung nach mindestens einem der Ansprüche 3 bis 5, **dadurch gekennzeichnet, dass** einer oder mehreren den Ansaugvorrichtungen eine Ventileinrichtung zugeordnet ist, die eingerichtet ist, die eine oder die mehreren Ansaugvorrichtungen zum Ansaugen zu öffnen und zum Blockieren zu schließen.

7. Vorrichtung nach Anspruch 6, **dadurch gekennzeichnet, dass** der einen oder den mehreren Ventileinrichtungen eine Ventilsteuerung (30) zugeordnet ist, welche eingerichtet ist, die eine oder die mehreren Ventileinrichtungen in Abhängigkeit von Positionssignalen zu öffnen / schließen, welche eine Verlagerungsposition des Laufkrans (5) beim Verlagern im Bereich des Aufbereitungsbeckens (1) anzeigen.

8. Vorrichtung nach mindestens einem der vorangehenden Ansprüche, **dadurch gekennzeichnet, dass** eine Laufeinheit (6) vorgesehen ist, die auf dem Laufkran (5) angeordnet und entlang des Laufkrans (5) und so in Querrichtung des Aufbereitungsbeckens (1) verlagerbar ist.

9. Vorrichtung nach Anspruch 8, **dadurch gekennzeichnet, dass** die Absaugeinrichtung (10) zumindest teilweise an der Laufeinheit (6) gebildet ist.

10. Vorrichtung nach Anspruch 8 oder 9, **dadurch gekennzeichnet, dass** die Wendevorrichtungen (8) an der Laufeinheit (6) angeordnet und mit dieser in Querrichtung des Aufbereitungsbeckens (1) verlagerbar sind.

11. Vorrichtung nach mindestens einem der vorangehenden Ansprüche, **dadurch gekennzeichnet, dass** der Abluftwäscher (11; 12) mit einem mobilen Abluftwäscher gebildet ist, welcher beim Verlagern des Laufkrans (5) und / oder der Laufeinheit (6) jeweils zusammen mit Laufkran (5) und / oder der Laufeinheit (6) mitverlagerbar ist.

12. Vorrichtung nach mindestens einem der vorangehenden Ansprüche, **dadurch gekennzeichnet, dass** der Abluftwäscher (11; 12) mit einem stationären Abluftwäscher gebildet ist, welcher in Bezug auf das Aufbereitungsbecken (1) stationär angeordnet und über eine flexible Abluftleitung mit der Absaugeinrichtung (10) verbunden ist.

13. Vorrichtung nach mindestens einem der vorangehenden Ansprüche, **gekennzeichnet durch** eine Trenneinrichtung, die eingerichtet ist, ausgehend von dem Laufkran (5), zumindest einen räumlichen Bereich oberhalb des Materialbetts (4) und unterhalb des Laufkrans (5) ein- oder mehrseitig von der Umgebung oberhalb des Materialbetts (4) abzutrennen, wobei die Absaugeinrichtung (10) eingerichtet ist, die Abgase zumindest in dem räumlichen Bereich abzusaugen.

14. Vorrichtung nach mindestens einem der vorangehenden Ansprüche, **gekenn-zeichnet** durch eine Dosiereinrichtung (20), die eingerichtet ist, ein flüssiges Material in das feste organische Trägermaterial zumindest im Bereich der Wendevorrichtungen (8) und / oder benachbart hierzu einzudosieren.

15. Vorrichtung nach Anspruch 14, **dadurch gekennzeichnet, dass** dem Aufbereitungsbecken (1) ein Reservoir (14) zugeordnet ist, welches eingerichtet ist, eine Vorratsmenge des flüssigen Materials aufzunehmen, derart, dass das flüssige Material aus dem Reservoir (14) mittels einer Pumpeinrichtung (21) über eine Zuführleitung der Dosiereinrichtung (20) zum Eindosieren zuführbar ist.

16. Verfahren zum Betreiben einer Vorrichtung zum Herstellen von Humusmaterial oder Kompost, aufweisend:
- ein Aufbereitungsbecken (1);
- einen Laufkran (5), welcher sich in Querrichtung über dem Aufbereitungsbecken (1) erstreckt und in Längsrichtung entlang des Aufbereitungsbeckens (1) verlagerbar ist;
- eine Wendeeinrichtung (7), welche an dem Laufkran (5) angeordnet ist, derart, dass die Wendeeinrichtung (7) mit dem Laufkran (5) in Längsrichtung des Aufbereitungsbeckens (1) verlagerbar ist, und welche Wendevorrichtungen (8) aufweist, die eingerichtet sind, das feste organische Trägermaterial im Materialbett (4) zu wenden;
- eine Belüftungseinrichtung (22), die eingerichtet ist, das feste organische Trägermaterial im Bereich der Wendevorrichtungen (8) und / oder benachbart hierzu zu belüften; und
- eine dem Aufbereitungsbecken (1) zugeordneten Ablufteinrichtung mit einer Absaugeinrichtung (10), die an dem Laufkran (5) angeordnet ist, und einem Abluftwäscher (11; 12);
wobei das Verfahren Folgendes aufweist:
- Herstellen eines Materialbetts (4) in dem Aufbereitungsbecken (1), indem ein festes organisches Trägermaterial wie Grünschnitt, Stroh, Mist, Frischkompost oder dergleichen in dem Aufbereitungsbecken (1) eingebracht wird;
- Verlagern der Wendeeinrichtung (7) in eine Arbeitsposition im Bereich des Aufbereitungsbecken (1), wobei die Wendeeinrichtung (7) hierbei mittels Verlagern des Laufkrans (5) in die Arbeitsstellung verlagert wird;
- Wenden des festen organischen Trägermaterials in einem lokalen Bereich des Materialbetts (4) mittels der Wendevorrichtungen (8);
- Absaugen von im Materialbett (4) entstehenden Abgasen mittels der Absaugeinrichtung (10); und
- Reinigen der abgesaugten Abluft mittels des Abluftwäschers (11; 12).
